# EUROPÄISCHE PATENTSCHRIFT

(11) **EP 2 832 222 B1**
(45) Veröffentlichungstag und Bekanntmachung des Hinweises auf die Patenterteilung: **06.04.2016**
(21) Anmeldenummer: 14401080.8
(22) Anmeldetag: 29.07.2014
(51) Int. Cl.: A01M 7/00

(54) **Landwirtschaftliche Feldspritze**
Agricultural field spraying device
Pulvérisateur agricole

(30) Priorität: 31.07.2013 DE 102013108181
(43) Veröffentlichungstag der Anmeldung: 04.02.2015
(73) Patentinhaber: Amazonen-Werke H. Dreyer GmbH & Co. KG, 49205 Hasbergen (DE)
(72) Erfinder: Kretschmar, Tom, 04109 Leipzig (DE)

(56) Entgegenhaltungen:
- EP-A2- 2 425 714
- WO-A1-2005/039285
- DE-A1-102007 007 870

## Beschreibung

Die Erfindung betrifft eine landwirtschaftliche Feldspritze gemäß des Oberbegriffes des Patentanspruches 1.

Derartige landwirtschaftliche Feldspritzen sind in der Praxis bekanntgeworden. Landwirtschaftliche Feldspritzen sind zum dosierten Ausbringen von mit Frischwasser zu einer Spritzbrühe verdünnten Pflanzenbehandlungsmitteln und/oder Düngemitteln vorgesehen und weisen einen die auszubrinende Spritzbrühe aufnehmenden Spritzmitteltank auf. An dem unteren Bereich des Spritzmitteltanks ist eine Saugleitung mit einer vorzugsweise als Saugfilter ausgebildeten Filtereinrichtung angeschlossen. Der Saugleitung ist ein Mehrwegeventil zugeordnet. Weiterhin weist die Feldspritze eine einen Sauganschluss und einen Druckanschluss aufweisende angetriebene Flüssigkeitspumpe zur Förderung der sich im Spritzmitteltank befindlichen Spritzbrühe zu vorzugsweise als Spritzdüsen ausgebildeten Ausbringelementen auf.

Die Saugleitung und/oder die der Saugleitung zugeordneten Bauteile können bauart- und/oder maschinenbedingt nicht von dem Anschluss der Saugleitung am Spritzmitteltank bis zu dem Sauganschluss an der Förderpumpe ohne Wiederanstieg in dem Flüssigkeitssystem angeordnet werden. Aufgrund der relativ großen Querschnitte in den Saugleitungen und den darin angeordneten Bauteilen verbleibt bei der vollständigen Entleerung des Spritzmitteltanks noch Flüssigkeit in den tiefer liegenden Bereichen des Flüssigkeitssystems, welche nicht von der Förderpumpe aus dem Flüssigkeitssystem herausgesaugt werden kann. Somit verbleibt eine entsprechende Flüssigkeitsmenge, die sog. Restmenge im Flüssigkeitssystem zurück. Diese Restmenge muss dann manuell durch manuelles Öffnen von im Flüssigkeitssystem angeordnetem Ablasshahn entfernt und in einem separaten Auffangbehältnis aufgefangen werden.

Der Erfindung liegt die Aufgabe zugrunde, ein verbessertes System für das Entfernen der sog. Restmenge von Flüssigkeit aus den tieferliegenden Bereichen des Flüssigkeitssystems in dessen Saugbereich zu schaffen.

Diese Aufgabe wird erfindungsgemäß dadurch gelöst, dass an der Saugleitung in ihrer zumindest annähernd tiefsten Stelle in dem Bereich zwischen dem Spritztank und der Flüssigkeitspumpe der Anfang einer Zweigleitung angeschlossen ist, dass das Ende dieser Zweigleitung in Saugrichtung gesehen in die Saugleitung zu der Flüssigkeitspumpe hinter der Filtereinrichtung einmündet.

Infolge dieser Maßnahmen wird über die Zweigleitung die Restmenge aus dem Flüssigkeitssystem durch die Förderpumpe herausgesaugt und gelang so nicht außerhalb des Flüssigkeitssystems und wird in normaler Weise über das Flüssigkeits- und Spritzsystem ausgebracht. Es wird nach dem Strohhalm-Prinzip mit einem kleineren Leitungsquerschnitt die Restmenge an Flüssigkeit aus dem Flüssigkeitssystem herausgesaugt. Es wird hierzu also ein Bypass parallel zu dem normalen Saugpfad der Förderpumpe geschaffen. Es wird also ein Hebewerk geschaffen, welches den Höhenunterschied beim Entfernen der Restmenge ausgleicht. Weil die Restmenge von Spritzflüssigkeit aus dem Flüssigkeitssystem herausgesaugt sind, werden auch beim anschließenden Reinigungsvorgang der Feldspritze in kürzerer Zeit bessere Reinigungsergebnisse erreicht.

Ein möglichst vollständiges Entfernen bzw. Absaugen der Restmenge aus dem Flüssigkeitssystem wird in einfacher Weise dadurch erreicht, dass der Anfang der Zweigleitung zumindest annähernd am tiefsten Bereich der Saugleitung und /oder mit der Saugleitung verbundenen Elementen, wie Saugfilter angeschlossen ist.

Um eine Umschaltung auf verschiedene Funktionen zu ermöglichen, ist vorgesehen, dass das Mehrwegeventil in der Saugleitung zwischen dem Sauganschluss der Pumpe und dem Saugfilter angeordnet ist.

Um eine einfache Zuschaltung der Zwischenleitung zu ermöglichen, ist vorgesehen, dass ein weiteres Mehrwegeventil in der Saugleitung zwischen dem Spritzmitteltank und dem Saugfilter angeordnet ist.

Ein einfacher Anschluss der Zweigleitung an die Saugleitung lässt sich dadurch verwirklichen, dass der Anfang der Zweigleitung an dem weiteren Mehrwegehahn angeschlossen ist. Bei einer derartigen Anordnung kann die Zweigleitung an das Mehrwegeventil angeschlossen werden.

Um eine vollständige Entleerung des Flüssigkeitssystems in einfacher Weise zu erreichen, ist vorgesehen, dass der Anfang der Zweigleitung an die Saugfiltereinrichtung angeschlossen ist.

Ein sicheres absaugen der Restmenge aus dem Flüssigkeitssystem wird dadurch erreicht, dass die Zweigleitung einen Durchmesser aufweist, der kleiner als 40mm ist, vorzugsweise 20 bis 30 mm beträgt.

Bei einer landwirtschaftlichen Feldspritze, bei der in dem von der Druckseite der Pumpe zu den Ausbringelementen führenden Druckleitungssystem zumindest ein Druckfilter angeordnet ist, ist vorgesehen, dass an dem zumindest annähernd untersten Bereich des Druckfilters eine Entleerungsleitung angeschlossen ist, dass die Entleerungsleitung in dem zu den Ausbringelementen führenden Druckleitungssystem einmündet. Infolge dieser Maßnahme wird eine sichere Entleerung des Flüssigkeitssystems mit Druckfilter erreicht.

Um die Zweigleitung von dem Saugsystem beim Ausbringen der Spritzbrühe trennen zu können, ist vorgesehen, dass der Entleerungsleitung ein zu öffnendes Absperrventil zugeordnet ist.

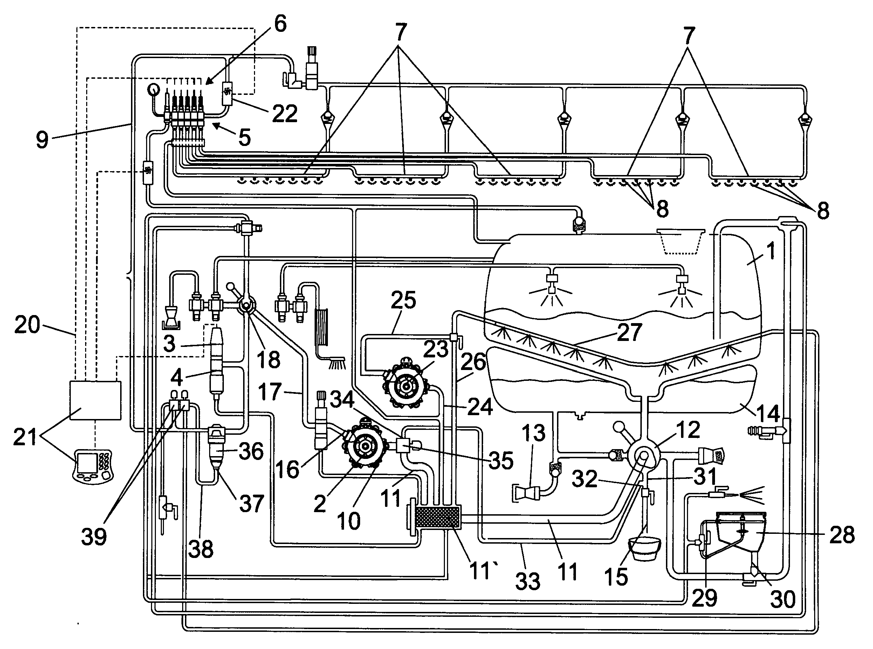

Weitere Einzelheiten der Erfindung sind der Beispielsbeschreibung zu entnehmen. Die Zeichnung zeigt

den Flüssigkeitsplan einer Feldspritze in Prinzipdarstellung.

Die Feldspritze weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 mit Spritzdüsen 8 bestückten Verteilergestänge führende Spritzleitung 9 auf.

Auf der Saugseite 10 der Pumpe 2 ist die Saugleitung 11 mit ihrer Filtereinrichtung 11' angeschlossen, die unter Zwischenschaltung eines zentralen Umschaltventils 12 am unteren Bereich des Flüssigkeitstank 1 angeschlossen ist. An dem Umschaltventil 12 können noch weitere Leitungen zum externen Anschluss 13 von Wassertanks, Vorrichtungen zum Ansaugen von Wasser aus Gewässern, zum Anschluss des Klarwasserbehälters 14 sowie eine Ablaufleitung 15 angeschlossen sein. Auf der Druckseite 16 der Pumpe 2 ist eine Druckleitung 17 angeordnet, die unter Zwischenschaltung eines weiteren Umschaltventils 18 zu dem Regelventil 4 der Dosierarmatur und weiterer Einrichtungen der Feldspritze führt. Die verschiedenen Rücklaufleitungen sind zu einer Sammelrücklaufleitung 19 zusammengefasst. Die Rücklaufleitung 19 mündet in den Flüssigkeitstank 1.

In der von den dem Regelventil 4 zu den Teilbreitenleitungen 7 führenden Spritzleitung 9 ist der über die Signalleitung 20 mit der als Bordcomputer 21 ausgebildeten elektronischen Steuer- und/oder Regeleinrichtung verbundene Durchflussmesser 22 angeordnet.

Unterhalb des Flüssigkeitstanks 1 ist der Klarwasserbehälter 14 zur Aufnahme von Klarwasser angeordnet. An diesem Klarwasserbehälter 14 ist eine zweite Pumpe 23 angeschlossen. Saugseitig ist diese zweite Pumpe über die Leitung 24 mit dem Umschaltventil 12 verbunden. Hierüber kann die Saugleitung 24 wahlweise mit verschiedenen Flüssigkeitsreservoirs, beispielsweise mit dem Flüssigkeitstank 1, dem Klarwasserbehälter 14 oder über den Anschluß 13 mit einem externen Flüssigkeitsvorrat 13 verbunden werden. Druckseitig ist an der zweiten Pumpe 23 die Druckleitung 25 angeschlossen, welche mit dem Spül- 26 und/oder Rührsystem 27 bei entsprechenden Ventilstellungen der Feldspritze zu verbinden ist.

Die Feldspritze weist weiterhin den Einspülbehälter 28 auf. An dem Einspülbehälter 28 ist in dessen oberen Bereich eine vorzugsweise als Frischwasserzuführleitung ausgebildete Befüllleitung 29 angeordnet ist. An den unteren Bereich des Einspülbehälters 28 ist eine in dem Flüssigkeitstank 1 einmündende Saugleitung 30 angeschlossen. Über die Saugleitung 30 wird' Flüssigkeit aus dem Einspülbehälter28 abgesaugt und in den Flüssigkeitstank 1 verbracht.

An der Saugleitung 11 ist in ihrer zumindest annähernd tiefsten Stelle 31 in dem Bereich zwischen dem Spritztank 1 und der Flüssigkeitspumpe 2 der Anfang 32 einer Zweigleitung 33 angeschlossen. Hierbei ist der Anfang 32 der Zweigleitung 33 somit am zumindest annähernd tiefsten Bereich 31 der Saugleitung 11 und mit dem in der Saugleitung 11 angeordnetem Saugfilter 11' angeschlossen. Somit ist der Anfang 32 der Zweigleitung 33 im Ausführungsbeispiel über die Leitung 11 an die Saugfiltereinrichtung 11' angeschlossen Das Ende 34 dieser Zweigleitung 33 mündet in Saugrichtung gesehen in die Saugleitung 11 zu der Flüssigkeitspumpe 2 hinter der Filtereinrichtung 11' ein.

Das Mehrwegeventil 35 in der Saugleitung 11 ist zwischen dem Sauganschluss 10 der Pumpe 2 und dem Saugfilter 11' angeordnet. Während ein weiteres Mehrwegeventil 12 in der Saugleitung 11 zwischen dem Spritzmitteltank 1 und dem Saugfilter 11' angeordnet ist. Hierbei ist der Anfang 32 der Zweigleitung 33 an dem weiteren Mehrwegehahn 12 angeschlossen.

In bevorzugter Weise weist die Zweigleitung 33 einen Durchmesser, der kleiner als 40mm ist, vorzugsweise 20 bis 30 mm beträgt.

Weiterhin weist das Flüssigkeitssystem der landwirtschaftlichen Feldspritze ein in der von der Druckseite 13 der Pumpe 2 zu den Ausbringelementen 8 führenden Druckleitungssystem angeordneten Druckfilter 36 auf. An dem zumindest annähernd untersten Bereich 37 dieses Druckfilters 36 ist eine Entleerungsleitung 38 angeschlossen. Diese Entleerungsleitung 38 mündet in dem zu den Ausbringelementen 8 führenden Druckleitungssystem ein. Der Entleerungsleitung 38 ein zu öffnendes Absperrventil 39 zugeordnet ist.

Durch die vorbeschriebene Ausgestaltung des Flüssigkeitssystems wird über die Zweigleitung 33 die Restmenge aus dem Flüssigkeitssystem durch die Förderpumpe 2 herausgesaugt und gelang so nicht außerhalb des Flüssigkeitssystems und wird in normaler Weise über das Flüssigkeits- und Spritzsystem ausgebracht. Es wird nach dem Strohhalm-Prinzip mit einem kleineren Leitungsquerschnitt die Restmenge an Flüssigkeit aus dem Flüssigkeitssystem herausgesaugt. Es wird hierzu also ein Bypass parallel zu dem normalen Saugpfad der Förderpumpe 2 geschaffen. Es wird also ein Hebewerk geschaffen, welches den Höhenunterschied beim Entfernen der Restmenge ausgleicht. Weil die Restmenge von Spritzflüssigkeit aus dem Flüssigkeitssystem herausgesaugt sind, werden auch beim anschließenden Reinigungsvorgang der Feldspritze in kürzerer Zeit bessere Reinigungsergebnisse erreicht.

Somit wird ein möglichst vollständiges Entfernen bzw. Absaugen der Restmenge aus dem Flüssigkeitssystem in einfacher Weise erreicht.

## Patentansprüche

1. Landwirtschaftliche Feldspritze zum dosierten Ausbringen von mit Frischwasser zu einer Spritzbrühe verdünnten Pflanzenbehandlungsmitteln und/oder Düngemitteln mit einem Spritzmitteltank (1), zumindest einer Saugleitung (11) mit einem vorzugsweise als Saugfilter (11') ausgebildeten Filtereinrichtung, zumindest einem Mehrwegeventil (12, 35), einer einen Sauganschluss (10) und einen Druckanschluss (16) aufweisenden angetriebenen Flüssigkeitspumpe (2) zur Förderung der sich im Spritzmitteltank (1) befindlichen Spritzbrühe zu vorzugsweise als Spritzdüsen (8) ausgebildeten Ausbringelementen, **dadurch gekennzeichnet, dass** an der Saugleitung (11) in ihrer zumindest annähernd tiefsten Stelle (31) in dem Bereich zwischen dem Spritztank (1) und der Flüssigkeitspumpe (2) der Anfang (32) einer Zweigleitung (33) angeschlossen ist, dass das Ende (34) dieser Zweigleitung (33) in Saugrichtung gesehen in die Saugleitung (11) zu der Flüssigkeitspumpe (2) hinter der Filtereinrichtung (11') einmündet.

2. Landwirtschaftliche Feldspritze nach Anspruch 1, **dadurch gekennzeichnet, dass** der Anfang (32) der Zweigleitung (33) zumindest annähernd am tiefsten Bereich (31) der Saugleitung (11) und /oder mit der Saugleitung (11) verbundenen Elementen, wie Saugfilter (11') angeschlossen ist.

3. Landwirtschaftliche Feldspritze nach zumindest einem der vorstehenden Ansprüche, **dadurch gekennzeichnet, dass** das Mehrwegeventil (35) in der Saugleitung (11) zwischen dem Sauganschluss (10) der Pumpe (2) und dem Saugfilter (11') angeordnet ist.

4. Landwirtschaftliche Feldspritze nach zumindest einem der vorstehenden Ansprüche, **dadurch gekennzeichnet, dass** ein weiteres Mehrwegeventil (12) in der Saugleitung (11) zwischen dem Spritzmitteltank (1) und dem Saugfilter (11') angeordnet ist.

5. Landwirtschaftliche Feldspritze nach zumindest einem der vorstehenden Ansprüche, **dadurch gekennzeichnet, dass** der Anfang (32) der Zweigleitung (33) an dem weiteren Mehrwegehahn (12) angeschlossen ist.

6. Landwirtschaftliche Feldspritze nach zumindest einem der vorstehenden Ansprüche, **dadurch gekennzeichnet, dass** der Anfang (32) der Zweigleitung (33) an die Saugfiltereinrichtung (11') angeschlossen ist.

7. Landwirtschaftliche Feldspritze nach zumindest einem der vorstehenden Ansprüche, **dadurch gekennzeichnet, dass** die Zweigleitung (33) einen Durchmesser aufweist, der kleiner als 40mm ist, vorzugsweise 20 bis 30 mm beträgt.

8. Landwirtschaftliche Feldspritze nach zumindest einem der vorstehenden Ansprüche, wobei in der von der Druckseite (16) der Pumpe (2) zu den Ausbringelementen (8) führenden Druckleitungssystem zumindest ein Druckfilter (36) angeordnet ist, **dadurch gekennzeichnet, dass** an dem zumindest annähernd untersten Bereich (37) des Druckfilters (36) eine Entleerungsleitung (38) angeschlossen ist, dass die Entleerungsleitung (38) in dem zu den Ausbringelementen (8) führenden Druckleitungssystem einmündet.

9. Landwirtschaftliche Feldspritze nach zumindest einem der vorstehenden Ansprüche, **dadurch gekennzeichnet, dass** der Entleerungsleitung (38) ein zu öffnendes Absperrventil (39) zugeordnet ist.

## Claims

1. Agricultural field spraying device for the metered dispensing of fertilizers and/or plant treatment compositions diluted with fresh water to form a spray liquor, having a spray tank (1), at least one suction line (11) with a filter device configured preferably as a suction filter (11'), at least one multi-way valve (12, 35), a driven liquid pump (2), having a suction port (10) and a pressure port (16), for delivering the spray liquor located in the spray tank (1) to dispensing elements configured preferably as spray nozzles (8), **characterized in that** the start (32) of a branch line (33) is connected to the suction line (11) at the at least approximately lowest point (31) thereof in the region between the spray tank (1) and the liquid pump (2), **in that** the end (34) of said branch line (33), as seen in the suction direction, leads into the suction line (11) to the liquid pump (2) downstream of the filter device (11').

2. Agricultural field spraying device according to Claim 1, **characterized in that** the start (32) of the branch line (33) is connected at least approximately to the lowest region (31) of the suction line (11) and/or elements connected to the suction line (11), such as the suction filter (11').

3. Agricultural field spraying device according to at least one of the preceding claims, **characterized in that** the multi-way valve (35) is arranged in the suction line (11) between the suction port (10) of the pump (2) and the suction filter (11').

4. Agricultural field spraying device according to at least one of the preceding claims, **characterized in that** a further multi-way valve (12) is arranged in the suction line (11) between the spray tank (1) and the suction filter (11').

5. Agricultural field spraying device according to at least one of the preceding claims, **characterized in that** the start (32) of the branch line (33) is connected to the further multi-way valve (12).

6. Agricultural field spraying device according to at least one of the preceding claims, **characterized in that** the start (32) of the branch line (33) is connected to the suction filter device (11').

7. Agricultural field spraying device according to at least one of the preceding claims, **characterized in that** the branch line (33) has a diameter which is smaller than 40 mm, preferably 20 to 30 mm.

8. Agricultural field spraying device according to at least one of the preceding claims, wherein at least one pressure filter (36) is arranged in the pressure line system leading from the pressure side (16) of the pump (2) to the dispensing elements (8), **characterized in that** a drain line (38) is connected to the at least approximately lowest region (37) of the pressure filter (36), **in that** the drain line (38) leads into the pressure line system leading to the dispensing elements (8).

9. Agricultural field spraying device according to at least one of the preceding claims, **characterized in that** the drain line (38) is assigned a shut-off valve (39) to be opened.

## Revendications

1. Pulvérisateur agricole pour l'application dosée d'agents de traitement des plantes et/ou d'engrais dilués à l'eau fraîche en une mixture à pulvériser avec un réservoir d'agent à pulvériser (1), au moins une conduite d'aspiration (11) avec un dispositif de filtre constitué de préférence par un filtre aspirant (11'), au moins une vanne à plusieurs voies (12, 35), une pompe à liquide entraînée (2) présentant un raccord d'aspiration (10) et un raccord de refoulement (16) pour le transport de la mixture à pulvériser se trouvant dans le réservoir d'agent à pulvériser (1) jusqu'à des éléments d'application constitués de préférence par des buses de pulvérisation (8), **caractérisé en ce que** le début (32) d'une conduite de dérivation (33) est raccordé à la conduite d'aspiration (11) à son point au moins approximativement le plus bas (31) dans la région située entre le réservoir de pulvérisation (1) et la pompe à liquide (2), et **en ce que** l'extrémité (34) de cette conduite de dérivation (33), vue dans la direction d'aspiration, débouche dans la conduite d'aspiration (11) vers la pompe à liquide (2) après le dispositif de filtre (11').

2. Pulvérisateur agricole selon la revendication 1, **caractérisé en ce que** le début (32) de la conduite de dérivation (33) est raccordé au moins approximativement à l'endroit le plus bas (31) de la conduite d'aspiration (11) et/ou à des éléments raccordés à la conduite d'aspiration (11), comme le filtre aspirant (11').

3. Pulvérisateur agricole selon au moins une des revendications précédentes, **caractérisé en ce que** la vanne à plusieurs voies (35) est disposée dans la conduite d'aspiration (11) entre le raccord d'aspiration (10) de la pompe (2) et le filtre aspirant (11').

4. Pulvérisateur agricole selon au moins une des revendications précédentes, **caractérisé en ce qu'**une autre vanne à plusieurs voies (12) est disposée dans la conduit d'aspiration (11) entre le réservoir d'agent à pulvériser (1) et le filtre aspirant (11').

5. Pulvérisateur agricole selon au moins une des revendications précédentes, **caractérisé en ce que** le début (32) de la conduite de dérivation (33) est raccordé à l'autre vanne à plusieurs voies (12).

6. Pulvérisateur agricole selon au moins une des revendications précédentes, **caractérisé en ce que** le début (32) de la conduite de dérivation (33) est raccordé au dispositif de filtre aspirant (11').

7. Pulvérisateur agricole selon au moins une des revendications précédentes, **caractérisé en ce que** la conduite de dérivation (33) présente un diamètre, qui est inférieur à 40 mm, et qui vaut de préférence 20 à 30 mm.

8. Pulvérisateur agricole selon au moins une des revendications précédentes, dans lequel au moins un filtre-presse (36) est disposé dans le système de conduite de refoulement menant du côté de refoulement (16) de la pompe (2) aux éléments d'application (8), **caractérisé en ce qu'**une conduite de vidange (38) est raccordée à la région au moins approximativement la plus basse (37) du filtre-presse (36), et **en ce que** la conduite de vidange (38) débouche dans le système de conduite de refoulement menant aux éléments d'application (8).

9. Pulvérisateur agricole selon au moins une des revendications précédentes, **caractérisé en ce qu'**une vanne d'arrêt à ouvrir (39) est associée à la conduite de vidange (38).
